# FASCICULE DE BREVET EUROPEEN

(11) **EP 2 126 449 B1**
(45) Date de publication et mention de la délivrance du brevet: **05.06.2013**
(21) Numéro de dépôt: 08761886.4
(22) Date de dépôt: 14.02.2008
(51) Int. Cl.: F16L 15/00, F16L 58/18

(54) **DISPOSITIF DE PROTECTION AVEC LANGUETTE D'ETANCHEITE D'UNE EXTRÉMITÉ FEMELLE D'UN COMPOSANT DE JOINT FILETÉ TUBULAIRE**
SCHUTZVORRICHTUNG MIT DICHTLIPPEN FÜR DAS INNENGEWINDE EINES ROHRVERSCHRAUBUNGSTEILS
PROTECTION DEVICE WITH SEALING LIPS FOR A FEMALE END OF A THREADED TUBULAR JOINT COMPONENT

(30) Priorité: 21.02.2007 FR 0701222
(43) Date de publication de la demande: 02.12.2009
(73) Titulaire: VALLOUREC MANNESMANN OIL & GAS FRANCE, 59620 Aulnoye-Aymeries (FR); Vam Mexico Sa De Cv, 91697 Veracruz (MX)
(72) Inventeur: COURTOIS, Sébastien, F-01112 Oyonnax (FR); VELAZQUEZ PINEDA, Roque, Veracruz, 94294 (MX); CADIOU, Erwan, F-29000 Quimper (FR); DE MAIGRET, Eric, F-59300 Valenciennes (FR)
(74) Mandataire: Plaçais, Jean Yves
(86) Numéro de dépôt international: PCT/FR2008/000190
(87) Numéro de publication internationale: WO 2008/116986

(56) Documents cités:
- EP-A1- 0 148 807
- DE-A1- 10 055 142
- US-A1- 2006 042 709

## Description

L'invention concerne les composants de joints filetés tubulaires, utilisés par exemple dans des applications pétrolières, et plus précisément la protection de l'extrémité femelle de certains de ces composants.

On entend ici par "composant" tout élément ou accessoire utilisé pour forer ou exploiter un puits et destiné à être assemblé par un filetage à un autre composant pour constituer avec cet autre composant un joint fileté tubulaire. Le composant peut être par exemple un tube de relativement grande longueur (notamment d'environ une dizaine de mètres de longueur), un manchon tubulaire de quelques dizaines de centimètres de longueur, un accessoire de ces tubes (dispositif de suspension ou « hanger », pièce de changement de section ou « cross-over », vanne de sécurité, connecteur pour tige de forage ou « tool joint », « sub », et analogues).

Les composants sont généralement assemblés les uns aux autres pour être descendus dans les puits d'hydrocarbures ou des puits similaires et constituer une garniture de forage, une colonne de tubes de cuvelage (« casing ») ou de tubage (« liners ») ou encore une colonne de tubes de production (« tubing ») (colonnes d'exploitation).

La spécification API 5CT émise par l'American Petroleum Institute (API), équivalente à la norme ISO 11960 : 2004 émise par l'International Standardisation Organisation (ISO), régit les tubes utilisés comme casing ou tubing, et la spécification API 5B définit des filetages standards pour ces tubes.

La spécification 7 de l'API définit des connecteurs filetés à épaulement pour tiges de forage rotatif.

Les fabricants de composants de joints filetés tubulaires ont également développé des joints filetés dits supérieurs qui présentent des filetages à géométries spécifiques, et des moyens spécifiques leur procurant de meilleures performances en service, notamment en matière de résistance mécanique et d'étanchéité. Des exemples de ces joints filetés supérieurs et de ces moyens spécifiques sont par exemple décrits dans les documents brevet EP 0488912, US 4,494,777 et EP 0767335.

Les composants précités comportent une extrémité femelle filetée qui est destinée à être vissée à une extrémité mâle filetée d'un autre composant de forage ou d'exploitation. Il est donc indispensable que leur extrémité femelle soit le moins possible endommagée, polluée et détériorée entre le moment où ils sortent de leur chaîne de fabrication et celui où ils sont utilisés, mais également entre deux utilisations successives. On comprendra qu'il est en effet nécessaire de protéger contre la corrosion, les poussières et les chocs (ou coups) non seulement le filetage intérieur, mais également la ou les surfaces annulaires (portée ou butée), qui ont chacun des fonctions spécifiques et complémentaires, notamment en vue d'assurer une étanchéité en phase d'utilisation.

Les extrémités des composants précités sont généralement enduites juste avant leur assemblage d'une graisse à propriétés anti-grippantes. Le document API RP 5A3 (anciennement API Bul. 5A2) ou ISO 13678 : 2000 définit de telles graisses et les modalités d'application de ces graisses sont décrites dans le document API RP 5C1. Toutefois les graisses selon le document API RP 5A3 présentent un certain nombre d'inconvénients liés à leur teneur en constituants toxiques, notamment en plomb, à l'excès de quantité de graisse appliquée et à la nécessité d'appliquer la graisse juste avant la descente des composants dans le puits.

Il a été ainsi proposé, notamment dans les documents brevet US 6,933,264, US 6,869,111 et WO 2003/102457, de remplacer la graisse, appliquée au pinceau en final sur l'extrémité du composant, par une fine couche, d'épaisseur prédéterminée appliquée en usine, d'un lubrifiant « semi-sec » exempt de métaux lourds. Il a également été proposé, notamment dans les documents brevet US 6,027,145, EP 1211451 et FR 0510503 (demande de brevet pas encore publiée), de remplacer la graisse appliquée au pinceau en final sur l'extrémité du composant par une fine couche, d'épaisseur prédéterminée appliquée en usine, d'un lubrifiant sec à base de particules de lubrifiants solides.

Dans ces cas de mise en oeuvre de lubrifiant sec ou semi-sec en usine, il est donc également et plus particulièrement nécessaire de protéger le mieux possible la couche de produit lubrifiant, dont les extrémités des composants sont enduites, tant d'un enlèvement mécanique que d'une pollution (sable, débris) préjudiciables à l'efficacité du produit lubrifiant.

Pour obtenir ce(s) protection(s), on place généralement, ainsi que l'exige la spécification API 5CT (au paragraphe 12.2), un dispositif de protection sur les extrémités mâle et femelle des composants de joints filetés tubulaires. De nombreux dispositifs de ce type ont été proposés pour les extrémités femelles, notamment dans les documents brevets EP 0148807 et US 2006/0042709.

Ce dernier document, dont les enseignements sont rappelés dans le préambule de la revendication 1, vise plus particulièrement les protecteurs pour joints qui sont préalablement enduits de lubrifiant en usine. Le protecteur qui s'y trouve décrit comprend un corps muni, d'une part, d'un filetage extérieur destiné à coopérer avec le filetage intérieur de l'extrémité femelle à protéger, et d'autre part, de premier et second éléments d'étanchéité flexibles de type annulaire placés respectivement en aval et en amont du filetage extérieur et chargés d'assurer des première et seconde étanchéités respectivement au niveau de surfaces annulaires interne et d'extrémité qui sont placées en amont et en aval du filetage intérieur de l'extrémité femelle. Le premier élément d'étanchéité est destiné à envelopper la zone contenant la surface annulaire interne de l'extrémité femelle tout en assurant une étanchéité par appui. Etant relativement massif, il est mal adapté à l'absorption des écarts dimensionnels de l'extrémité femelle et/ou de son protecteur, qui résultent de la fabrication et/ou de variations de température. En outre, il peut se déformer en présence de fortes variations de température et donc ne plus être en contact étroit avec la surface annulaire interne de l'extrémité femelle, favorisant ainsi le dévissage spontané du protecteur en présence de vibrations, générées notamment lors du transport, et/ou de variations de température *susceptibles de fluctuer de -40°C à* +*80*°C.

L'invention a donc pour but d'améliorer la situation.

Elle propose à cet effet un dispositif, d'une part, destiné à protéger l'extrémité femelle d'un composant d'un joint fileté tubulaire pour le forage et l'exploitation de puits d'hydrocarbures, qui est munie intérieurement d'au moins un filetage intérieur et d'une surface annulaire d'extrémité et d'une surface interne (éventuellement annulaire) placées respectivement en amont et en aval du filetage intérieur et présentant respectivement des première et seconde orientations choisies, et d'autre part, comprenant un corps muni d'un filetage extérieur destiné à coopérer avec le filetage intérieur et de premier et second éléments d'étanchéité flexibles de type annulaire placés respectivement en amont et en aval du filetage extérieur et chargés d'assurer des première et seconde étanchéités respectivement au niveau des surface interne et surface annulaire d'extrémité de l'extrémité femelle.

La surface d'extrémité annulaire est ici la partie la plus amont de l'extrémité femelle. Par conséquent, tout ce qui vient après cette surface d'extrémité annulaire est situé en aval. La surface annulaire d'extrémité est donc placée en amont du filetage intérieur tandis que la surface interne (éventuellement annulaire) est placée en aval de ce filetage intérieur. De même, le premier élément d'étanchéité est la partie la plus amont du corps (protecteur) du dispositif. Par conséquent, le premier élément d'étanchéité est placé en amont du filetage extérieur tandis que le second élément d'étanchéité est placé en aval de ce filetage extérieur.

Ce dispositif se caractérise par le fait ce que ses premier et second éléments d'étanchéité, d'une part, présentent des troisième et quatrième orientations choisies, dont l'une au moins diffère d'un angle au moins égal à 10° avec la deuxième ou la première orientation qui lui correspond (avant vissage du dispositif sur l'extrémité femelle), et d'autre part, sont déformables par flexion axiale afin d'acquérir par contact de surface avec les surface annulaire interne et surface annulaire d'extrémité de l'extrémité femelle une énergie s'opposant au moins partiellement à un dévissage imprévu (effet de frein anti-dévissage) lorsque cette extrémité femelle est vissée sur le corps dans une position finale. Le premier élément d'étanchéité est réalisé sous la forme d'une languette annulaire. La languette annulaire du premier élément d'étanchéité est raccordée au corps (protecteur) par la périphérie intérieure de celui-ci et se projette vers l'extérieur. La fabrication par moulage s'en trouve facilitée. La languette annulaire est bien protégée contre des éléments provenant de l'intérieur du tube et susceptibles de la détériorer accidentellement. En cas d'augmentation de la pression atmosphérique, la languette annulaire du premier élément d'étanchéité peut laisser passer de l'air pour équilibrer la pression. On évite ainsi un collage du dispositif sur un élément femelle rendant son dévissage volontaire difficile.

Le dispositif de protection selon l'invention peut se décliner selon de nombreuses variantes, dont certaines au moins des caractéristiques peuvent être combinées entre-elles, et notamment :
- la surface interne de l'extrémité femelle peut être une surface annulaire de butée ;
- son corps peut être agencé de sorte que pendant la phase de vissage le premier élément d'étanchéité entre en contact avec la surface annulaire interne de l'extrémité femelle avant que le second élément d'étanchéité n'entre en contact avec la surface annulaire d'extrémité de cette même extrémité femelle ;
- son corps peut être agencé de sorte que pendant la phase de vissage et au moment ou le premier élément d'étanchéité entre en contact avec la surface annulaire interne de l'extrémité femelle, le second élément d'étanchéité se trouve placé à une distance axiale de la surface annulaire d'extrémité de cette même extrémité femelle comprise entre environ 0,5 mm et environ 1 mm ;
- les première et quatrième orientations peuvent par exemple différer d'un angle compris entre 10° et environ 30°. Par exemple cet angle est égal à environ 15° ;
- en variante ou en complément, les deuxième et troisième orientations peuvent par exemple différer d'un angle compris entre 10° et environ 30°. Par exemple cet angle est égal à environ 15° ;
- l'angle entre les deuxième et troisième orientations peut diminuer au cours du vissage ;
- le second élément d'étanchéité peut être réalisé sous la forme d'une languette annulaire ;
- son corps peut être prolongé en aval du second élément d'étanchéité par un élément d'amortissement ;
- il peut être réalisé dans un matériau thermoplastique, par exemple en une seule pièce par moulage. Ce dernier peut par exemple être choisi dans un groupe comprenant au moins les mélanges à base de polycarbonate, le polyoxyméthylène ou polyacetal (POM), et les polyéthylènes à haute densité (PE-HD) ou à ultra haute densité (PE-UHD) ;
- ses premier et second éléments d'étanchéité peuvent être intégraux avec son corps (protecteur),
- la surface interne de l'extrémité femelle peut être une surface d'étanchéité par serrage radial.

D'autres caractéristiques et avantages de l'invention apparaîtront à l'examen de la description détaillée ci-après, et des dessins annexés, sur lesquels :
- la figure 1 illustre de façon schématique, dans une vue en perspective, un exemple de réalisation d'un dispositif de protection selon l'invention et un exemple de réalisation d'une extrémité femelle d'un joint fileté tubulaire de type VAM TOP,
- la figure 2 illustre de façon schématique, dans une autre vue en perspective, l'exemple de réalisation du dispositif de protection de la figure 1,
- les figures 3A et 3B illustrent de façon schématique, respectivement dans des vues en perspective et en coupe suivant l'axe XX du composant, un exemple de réalisation d'un premier élément d'étanchéité du dispositif de protection des figures 1 et 2,
- les figures 4A et 4B illustrent de façon schématique, respectivement dans des vues en perspective et en coupe suivant l'axe XX du composant, un exemple de réalisation d'un second élément d'étanchéité du dispositif de protection des figures 1 et 2,
- les figures 5A, 5B et 5C illustrent de façon schématique, dans des vues en coupe partielle suivant l'axe XX du composant, trois stades intermédiaires d'assemblage sur l'extrémité femelle de la figure 1 du dispositif de protection de la figure 1, équipé des premier et second éléments d'étanchéité illustrés sur les figures 3 et 4,
- les figures 6A et 6B sont des grossissements des zones de l'assemblage [dispositif de protection/extrémité femelle] de la figure 5C, comprenant respectivement les premier et second éléments d'étanchéité dans un premier mode de réalisation,
- la figure 7 illustre de façon schématique, dans une vue en coupe partielle suivant l'axe XX du composant, un quatrième stade intermédiaire d'assemblage sur l'extrémité femelle de la figure 1 du dispositif de protection de la figure 1, équipé des premier et second éléments d'étanchéité illustrés sur les figures 3 et 4,
- les figures 8 et 9 sont des grossissements des zones de l'assemblage [dispositif de protection/extrémité femelle] de la figure 7, comprenant respectivement les premier et second éléments d'étanchéité,
- la figure 10 illustre de façon schématique, dans une vue en coupe partielle suivant l'axe XX du composant, un cinquième stade (final) d'assemblage sur l'extrémité femelle de la figure 1 du dispositif de protection de la figure 1, équipé des premier et second éléments d'étanchéité illustrés sur les figures 3 et 4,
- les figures 11A et 11B sont des grossissements des zones de l'assemblage [dispositif de protection/extrémité femelle] de la figure 10, comprenant respectivement les premier et second éléments d'étanchéité, et
- la figure 12 illustre de façon schématique, dans une vue en perspective, l'extrémité femelle du joint fileté tubulaire de type VAM TOP des figures 1 et 5 à 11 munie du dispositif de protection illustré sur les figures 1 à 11 et placé dans sa position finale.

Les dessins annexés pourront non seulement servir à compléter l'invention, mais aussi contribuer à sa définition, le cas échéant.

L'invention a pour but de limiter les possibilités de dévissage spontané d'un dispositif destiné à protéger l'extrémité femelle filetée, d'un composant tubulaire d'un joint fileté tubulaire (destiné au forage ou à l'exploitation de puits d'hydrocarbures ou similaires), contre les endommagements mécaniques, les pollutions (chimiques et matérielles) et les détériorations (corrosion), entre le moment où il sort de sa chaîne de fabrication et celui où il est utilisé (avec plusieurs montages-démontages possibles du dispositif de protection), mais également entre deux utilisations successives.

On considère dans ce qui suit que le composant est destiné au forage ou à l'exploitation de puits d'hydrocarbures et qu'il est équipé d'une extrémité femelle d'un joint fileté tubulaire manchonné ou intégral de la famille VAM [marque déposée] ou équivalent. Mais, l'invention n'est limitée ni à ce type de composant, ni au type d'extrémité femelle précité. L'invention concerne en effet tout type de composant de joint fileté tubulaire pour le forage ou l'exploitation, dès lors qu'il est équipé d'une extrémité femelle munie d'au moins un filetage intérieur et d'une surface annulaire d'extrémité et d'une surface interne (également annulaire dans le cas d'un joint de type VAM TOP) placées respectivement en amont et en aval du filetage intérieur et présentant respectivement des première et seconde orientations choisies.

Par ailleurs, on entend ici par « extrémité femelle » une extrémité femelle de composant (tube, manchon ou accessoire) pourvue d'un filetage intérieur et d'une surface annulaire d'extrémité et d'une surface interne (également annulaire dans le cas d'un joint de type VAM TOP) placées respectivement en amont et en aval du filetage intérieur. Le terme extrémité femelle (EF) ne désigne donc pas seulement la surface annulaire d'extrémité, située à l'extrémité libre du composant (T), mais également toute la partie du composant (T) qui comprend les moyens (femelles) de connexion à un autre composant de joint fileté tubulaire muni de moyens mâles de connexion (extrémité mâle).

Il est rappelé qu'un composant (T) comprend un corps ou partie courante (PC) terminé par une extrémité femelle (EF) ou une extrémité mâle.

Le filetage intérieur peut être en une ou plusieurs parties filetées distinctes, disposée(s) selon des surfaces cylindriques ou coniques.

Lorsque la ou une partie filetée est conique, celle-ci peut être subdivisée en une sous-partie dite à filets parfaits, dont le profil est constant et sans irrégularité ou imperfection (par exemple du type bavure) et une sous-partie dite à filets évanouissants ou imparfaits, dont la hauteur est progressivement décroissante et dont le profil peut présenter des irrégularités ou imperfections.

Le filetage intérieur de l'extrémité femelle du composant peut comprendre au moins deux parties filetées distinctes distantes axialement et/ou radialement l'une de l'autre, chacune de ces parties pouvant comprendre des filets parfaits et évanouissants. L'extrémité femelle du composant comprend une partie terminale libre qui se termine par une surface annulaire d'extrémité présentant une première orientation. Cette dernière est sensiblement transversale par rapport à la direction (XX) du composant (manchon) dans le cas d'un joint de type VAM TOP (elle définit alors un angle (Φ1) nul ou très faible par rapport au plan perpendiculaire à la direction XX).

Cette extrémité femelle comporte également au moins une surface interne (c'est-à-dire disposée au voisinage de la surface périphérique intérieure du composant T) annulaire (dans l'exemple considéré d'un joint de type VAM TOP) définissant alors un logement pour une extrémité mâle d'un autre composant destiné à être assemblé au composant considéré. Elle peut éventuellement comprendre également une ou plusieurs surfaces d'étanchéité métal/métal (en extrémité libre, en aval du filetage extérieur ou entre deux parties filetées) avec l'extrémité mâle considérée. Le dispositif de protection selon l'invention est préférablement conçu pour protéger tant le filetage que ces surfaces d'étanchéité, et si possible au moins l'une des surfaces annulaires d'extrémité S1 et interne S2, des endommagements ou blessures, des poussières et/ou de la corrosion.

On entend ici par « extérieur » un élément disposé selon une surface (ou une surface) qui est orienté(e) dans une direction radialement opposée à l'axe XX de l'extrémité femelle. A l'inverse, on entend ici par « intérieur » un élément (ou une surface) qui est orienté(e) vers l'axe XX de l'extrémité femelle.

La surface annulaire interne présente une seconde orientation. Cette dernière fait un angle (Φ2) non nul (par exemple de l'ordre de 15°) par rapport au plan perpendiculaire à la direction (XX) du composant dans le cas d'un joint de type VAM TOP (elle définit alors une surface annulaire de butée axiale d'une butée interne inverse).

Les modes de réalisation exposés ci-après, à titre d'exemples non limitatifs, sont tous relatifs à une extrémité femelle d'un manchon pour joint fileté tubulaire manchonné VAM TOP [marque déposée]. Mais, elle s'applique également à d'autres types de joint fileté avec ou sans manchon.

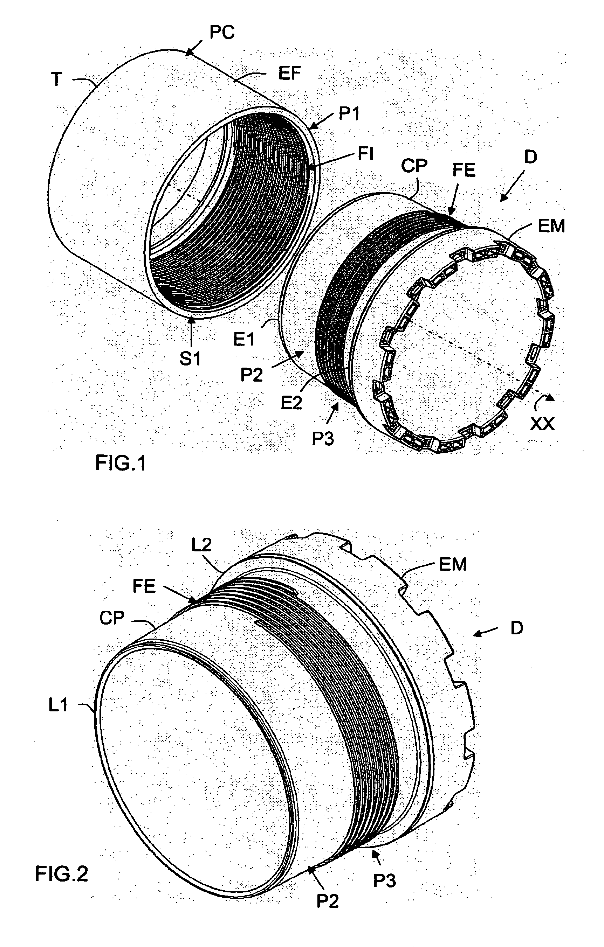

On se réfère tout d'abord aux figures 1 à 5 pour présenter l'invention et détailler sa mise en oeuvre sous la forme d'un exemple de réalisation.

Un dispositif de protection D selon l'invention comprend un corps CP destiné à être vissé dans l'extrémité femelle (filetée) EF d'un composant T.

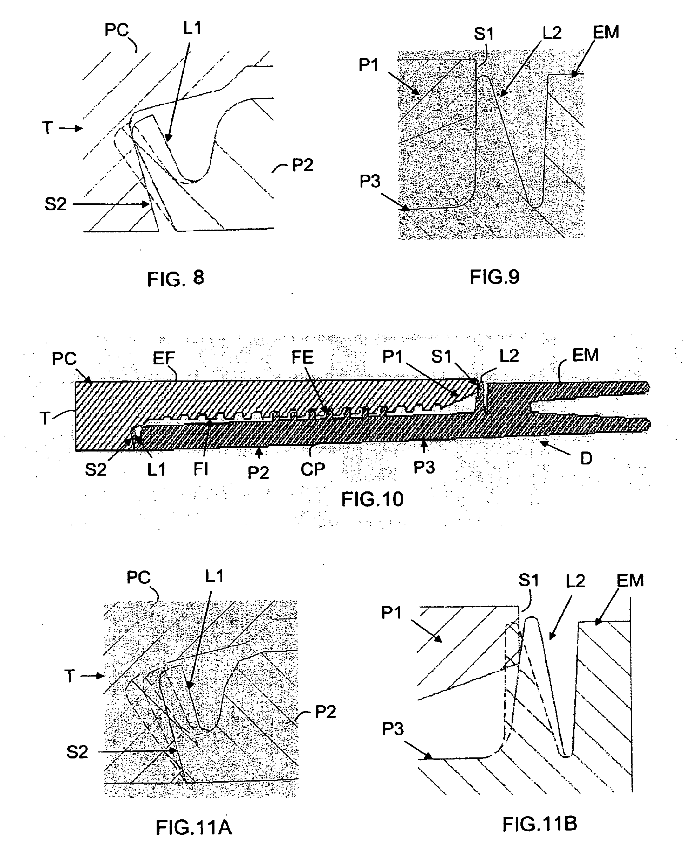

Le corps CP est réalisé sous la forme d'un manchon monobloc. Il est chargé de protéger le filetage intérieur FI de l'extrémité femelle EF et ses surfaces annulaires d'extrémité S1 et interne S2 qui présentent respectivement des première et seconde orientations. Il comprend une partie terminale P2 munie à son extrémité d'un premier élément d'étanchéité L1 flexible de type annulaire et chargé d'assurer une première étanchéité au niveau de la surface annulaire interne S2 de l'extrémité femelle EF lorsque son dispositif D est placé dans une position finale (illustrée sur les figures 10 à 12). Cette partie terminale P2 est prolongée du côté opposé au premier élément d'étanchéité L1 par une partie intermédiaire P3 contenant un filetage extérieur FE sur lequel peut s'engager le filetage intérieur FI de l'extrémité femelle EF. Cette partie intermédiaire P3 comprend également un second élément d'étanchéité L2 flexible de type annulaire et chargé d'assurer une seconde étanchéité au niveau de la surface annulaire d'extrémité S2 de l'extrémité femelle EF lorsque son dispositif D est placé dans sa position finale (illustrée sur les figures 10 à 12).

Selon l'invention, les premier L1 et second L2 éléments d'étanchéité sont déformables par flexion axiale afin d'acquérir par contact de surface respectivement avec les surface annulaire interne S2 et surface annulaire d'extrémité S1 une énergie qui s'oppose au moins partiellement à un dévissage imprévu (ou spontané) du dispositif D (en présence de vibrations générées notamment lors du transport et/ou de variations de température), lorsque l'extrémité femelle EF est vissée sur le corps CP dans la position finale. On reviendra plus loin sur cet effet de frein anti-dévissage résultant de l'acquisition d'énergie.

De préférence, et comme illustré sur les figures 1, 2, 4 et 5, la partie intermédiaire P3 est préférentiellement prolongée, du côté opposé à la partie terminale P2, par un élément d'amortissement (ou « bumper ») EM déformable de manière à amortir les chocs. Le diamètre extérieur de l'élément d'amortissement EM est avantageusement voisin de celui de l'extrémité femelle EF.

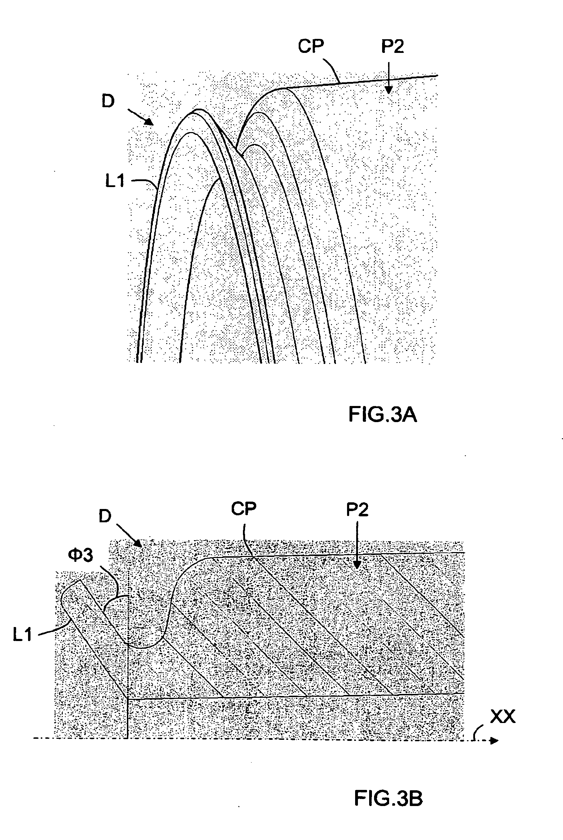

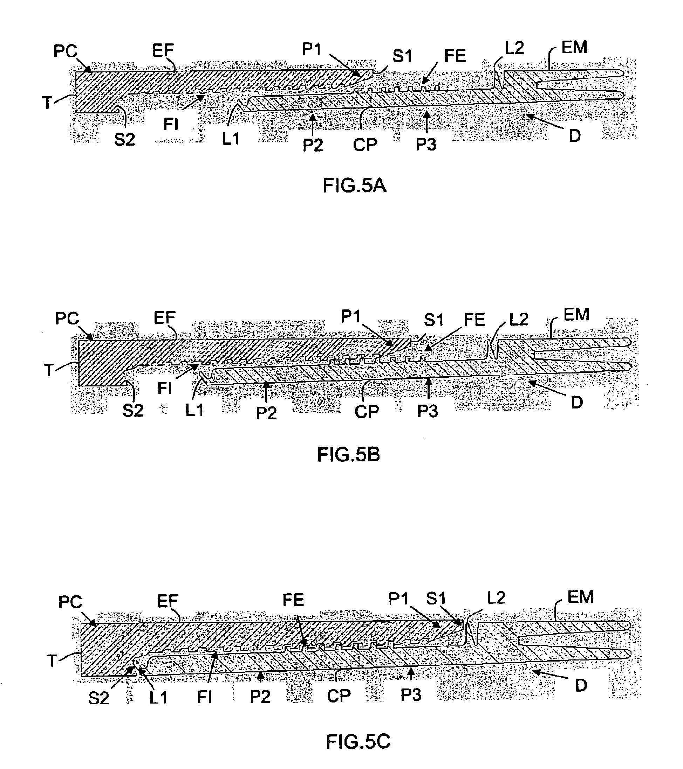

Comme illustré sur les figures 3 et 5, le premier élément d'étanchéité L1 est une projection radiale vers l'extérieur en forme de collerette (ou languette ou encore lamelle), destinée à être en contact étroit contre une partie au moins de la surface annulaire interne S2 de l'extrémité femelle EF, afin d'assurer une (première) étanchéité continue locale sur toute sa circonférence à ce niveau lorsque son dispositif D est placé dans sa position finale. La languette L1 est de préférence intégrale au corps (protecteur) CP et est attachée à celui-ci au voisinage de sa surface ou périphérie) intérieure. Le rapport entre la hauteur (radiale) et l'épaisseur de la languette (ou collerette) L1 est préférentiellement supérieur à 1. Par exemple on peut le choisir de l'ordre de 3.

Le premier élément d'étanchéité L1 présente initialement une troisième orientation qui dépend du type du joint dont fait partie l'extrémité femelle EF à laquelle est dédié le dispositif D. Dans l'exemple illustré sur les figures 3 et 5, qui correspond à un dispositif D destiné à protéger un joint de type VAM TOP, la troisième orientation, définie par l'orientation de la face avant (amont) de la languette L1 dirigée vers la surface annulaire interne S2, fait initialement (c'est à dire avant montage du dispositif D sur l'extrémité femelle EF) un angle Φ3 non nul par rapport au plan perpendiculaire à la direction XX du composant T. Cet angle Φ3 est initialement supérieur d'au moins 10° par rapport à celui Φ2 que fait la deuxième orientation de la surface annulaire interne S2 de l'extrémité femelle EF. De préférence, la différence angulaire initiale (Δ = Φ3 - Φ2) entre les troisième et deuxième orientations est comprise entre +10° et environ +30°. Plus préférentiellement encore cette différence angulaire initiale Δ est égale à environ +15°. L'angle Φ3 est choisi de sorte que le contact initial entre la languette L1 et la surface annulaire interne S2 ait lieu du côté extérieur de la languette L1.

Comme illustré sur les figures 10 et 11A, lorsque le dispositif D est destiné à protéger un joint de type VAM TOP, son premier élément d'étanchéité L1 recouvre la plus grande partie de la surface annulaire interne S2 de l'extrémité femelle EF tout en étant en contact étroit contre celle-ci, une fois placé dans la position finale. La collerette (ou languette ou encore lamelle) qui constitue le premier élément d'étanchéité L1 comprend ici deux faces annulaires sensiblement parallèles, présentant initialement toutes les deux la troisième orientation, l'une d'entre elles étant séparée du reste de la partie terminale P2 du corps CP par une vallée en forme de V relativement large (voir figure 3B) afin de permettre sa flexion axiale lors du placement du dispositif D dans sa position finale et de compenser des écarts dimensionnels (de fabrication et/ou induits par des variations de température).

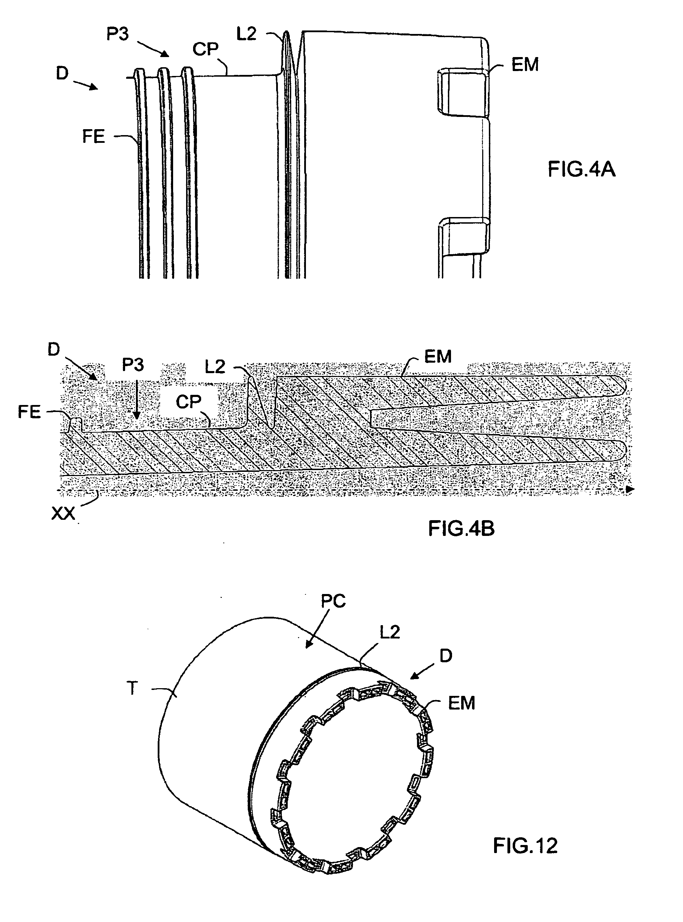

Par exemple, et comme illustré sur les figures 4 et 5, le second élément d'étanchéité L2 est également une projection radiale vers l'extérieur en forme de collerette (ou languette ou encore lamelle), destinée à être en contact étroit contre une partie au moins de la surface annulaire d'extrémité S1 de l'extrémité femelle EF, afin d'assurer une (seconde) étanchéité continue locale sur toute sa circonférence à ce niveau lorsque son dispositif D est placé dans sa position finale. La languette (ou collerette) L2 est de préférence intégrale au corps (protecteur) CP et est de préférence attachée à celui-ci au voisinage de sa surface externe. Le rapport entre la hauteur (radiale) et l'épaisseur de la languette L2, prise sensiblement à mi-hauteur de celle-ci, est préférentiellement supérieur à 1. Par exemple on peut le choisir de l'ordre de 3.

Le second élément d'étanchéité L2 présente initialement une quatrième orientation (définie par l'orientation de la face de la languette L2 dirigée vers la surface annulaire d'extrémité S1) qui dépend du type de joint dont fait partie l'extrémité femelle EF à laquelle est dédié le dispositif D. Dans l'exemple illustré sur les figures 4 et 5, qui correspond à un dispositif D destiné à protéger un joint de type VAM TOP, la quatrième orientation fait initialement (c'est-à-dire avant montage du dispositif D sur l'extrémité femelle EF) un angle Φ4 nul ou très petit par rapport au plan perpendiculaire à la direction XX du composant T de sorte que la différence d'angle Φ4 - Φ1 soit également nulle ou très faible. La collerette (ou languette ou encore lamelle) qui constitue le second élément d'étanchéité L2 comprend alors deux faces annulaires faisant un angle aigu entre elles (voir figure 4B) de sorte que l'épaisseur de la collerette L2 diminue en allant vers l'extérieur, la face inclinée étant séparée du reste de la partie intermédiaire P3 du corps CP par une vallée en forme de V relativement étroite afin de permettre sa flexion axiale lors du placement du dispositif D dans sa position finale et de compenser des écarts dimensionnels (de fabrication et/ou induits par des variations de température). Par conséquent, comme cela est illustré sur les figures 10 et 11B, lorsque le dispositif D est dans sa position finale, son second élément d'étanchéité L2 n'est en contact étroit que contre une petite partie de la surface annulaire d'extrémité S1 de l'extrémité femelle EF.

On notera que lorsque le dispositif D est destiné à protéger un joint d'un type différent d'un VAM TOP, la quatrième orientation peut faire initialement un angle Φ4 non nul par rapport au plan perpendiculaire à la direction XX du composant T. Cet angle Φ4 est initialement supérieur d'au moins 10° par rapport à celui Φ1 que fait la deuxième orientation de la surface annulaire d'extrémité S1 de l'extrémité femelle EF. De préférence, la différence angulaire initiale (Δ = Φ4 - Φ1) entre les quatrième et première orientations est comprise entre +10° et environ +30°. Plus préférentiellement encore cette différence angulaire initiale A est égale à environ +15°. La collerette (ou languette ou encore lamelle) qui constitue le second élément d'étanchéité L2 peut alors comprendre deux faces annulaires sensiblement parallèles, présentant initialement toutes les deux la troisième orientation, l'une d'entre elles étant séparée du reste de la partie terminale P2 du corps CP par une vallée en forme de V relativement large (comme c'est le cas du premier élément d'étanchéité L1 illustré sur la figure 3B) afin de permettre sa flexion axiale lors du placement du dispositif D dans sa position finale et de compenser des écarts dimensionnels (de fabrication et/ou induits par des variations de température).

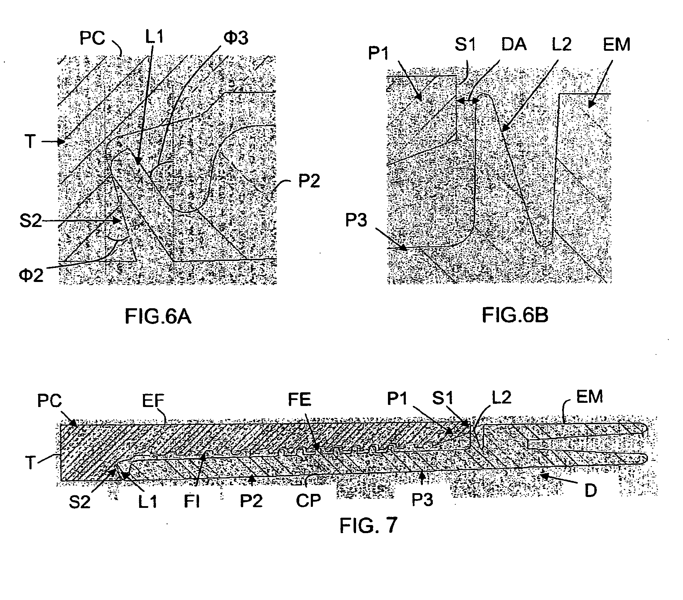

Les dimensions respectives des différentes parties (P2, P3) constituant le corps CP sont choisies de sorte que pendant la phase de vissage illustrée sur les figures 5 à 10, le premier élément d'étanchéité L1 entre en contact avec la surface annulaire interne S2 de l'extrémité femelle EF avant que le second élément d'étanchéité L2 n'entre en contact avec la surface annulaire d'extrémité S1 de cette même extrémité femelle EF. C'est ce qui est illustré dans l'exemple non limitatif des figures 5 et 6. Plus précisément, dans cet exemple, après avoir introduit sensiblement axialement le corps CP à l'intérieur de l'extrémité femelle EF de sorte que le début de son filetage extérieur FE parvienne devant le filetage intérieur FI de l'extrémité femelle EF (figure 5A - premier stade intermédiaire du vissage), on visse le dispositif D (figure 5B - deuxième stade intermédiaire du vissage) jusqu'à ce que son premier élément d'étanchéité L1 arrive au contact de la surface annulaire interne S2 de l'extrémité femelle EF (figures 5C et 6A - troisième stade intermédiaire du vissage). A ce troisième stade intermédiaire du vissage, le contact entre la languette L1 et la surface annulaire interne S2 s'effectue au voisinage de la partie la plus extérieure de la languette L1, et le second élément d'étanchéité L2 est placé à une certaine distance axiale DA de la surface annulaire d'extrémité S2 (voir figures 5C et 6B). Cette distance axiale DA est de préférence comprise entre environ 0,5 mm et environ 1 mm, et plus préférentiellement égale à environ 0,7 mm.

Ensuite, et comme illustré sur les figures 7, 8 et 9, on continue de visser le dispositif D jusqu'à ce que la face d'orientation sensiblement transversale du second élément d'étanchéité L2 arrive au contact de la surface annulaire d'extrémité S1 de l'extrémité femelle EF (voir figures 7 et 9 - premier stade finale du vissage). Comme illustré sur la figure 8, cela contraint le premier élément d'étanchéité L1 à commencer à se fléchir axialement (sa position initiale non fléchie est matérialisée par les traits en pointillés). Puis, on poursuit le vissage du dispositif D de manière, d'une part, à augmenter encore la flexion axiale du premier élément d'étanchéité L1 (voir figure 11A - les positions fléchies intermédiaires sont matérialisées par des traits en pointillés), et d'autre part, à contraindre le second élément d'étanchéité L2 à se fléchir axialement (voir figure 11B - sa position initiale non fléchie est matérialisée par les traits en pointillés).

Le dispositif D est alors dans sa position finale (voir figure 12). Les premier L1 et second L2 éléments d'étanchéité étant désormais fortement déformés par flexion axiale, ils ont acquis tous les deux par contact de surface avec les surface annulaire interne S2 et surface annulaire d'extrémité S1 de l'extrémité femelle EF une énergie élastique qui s'oppose au moins partiellement à un dévissage imprévu (ou spontané) pouvant être provoqué par des vibrations et/ou de fortes variations de température. C'est ce que l'on appelle le frein anti-dévissage. L'effet de frein sera d'autant plus important que l'on aura emmagasiné d'énergie élastique dans les premier L1 et second L2 éléments d'étanchéité.

On comprendra qu'une fois le dispositif D placé dans sa position finale, il protège parfaitement les surfaces annulaires d'extrémité S1 et interne S2 et le filetage intérieur FI de l'extrémité femelle EF. Il peut être dévissé à tout moment en exerçant une force supérieure et opposée à la somme des forces de frottement subies par les premier L1 et second L2 éléments d'étanchéité, sans que cela n'endommage les différentes parties de l'extrémité femelle EF, et sans que cela ne retire le lubrifiant (sec ou semi-sec) préalablement déposé.

La protection conférée par le dispositif D étant notamment mécanique, son corps CP et son éventuel élément d'amortissement (ou bumper) EM, doivent présenter une certaine rigidité tout en étant capables d'absorber au moins partiellement les coups. Pour ce faire, il peut par exemple être réalisé par injection (ou moulage) d'un matériau thermoplastique dans un moule adapté (il est alors de type monobloc, c'est-à-dire réalisé en une seule pièce). On notera que l'élément d'amortissement EM peut être éventuellement une pièce rapportée sur le corps CP. Dans ce cas, il peut être réalisé dans un matériau différent de celui du corps CP. Parmi les différentes familles de matériaux thermoplastiques qui peuvent être avantageusement utilisées, on peut notamment citer les mélanges à base de polycarbornate comme le polycarbonate-polyester (PC-PBT ou PC-PET), le polyoxyméthylène ou polyacetal (POM) et les polyéthylènes (PE) à haute ou ultra haute densité (PE-HD, PE-UHD).

La spécification API 5CT édition 2005 prévoit dans son annexe I des exigences pour les dispositifs de protection de filetages, notamment des valeurs minimales de résistance aux chocs axiaux et de biais (à 45°) pour trois températures (-46, +21 et +66°C).

On peut par exemple plus particulièrement choisir un PE-HD produit par la société BASELL et vendu sous le nom LUPOLEN 4261 AG UV 6005, un PE-UHD produit par la société TICONA et vendu sous le nom GUR 5113, un PC-PBT produit par la société BAYER et vendu sous le nom MAKROBLEND S7916, ou un POM produit par la société DU PONT et vendu sous le nom DELRIN 127UV.

L'invention ne se limite pas aux modes de réalisation de dispositif de protection décrits ci-avant, seulement à titre d'exemple, mais elle englobe toutes les variantes que pourra envisager l'homme de l'art dans le cadre des revendications ci-après.

Ainsi, l'invention concerne également d'autres types d'extrémité femelle que ceux décrits ci-avant (VAM TOP). Par exemple, elle concerne également les extrémités femelles de joints filetés tubulaires plus particulièrement avec butée interne, manchonnés (par exemple ceux de type NEW VAM, VAM ACE, DINOVAM, VAM HW ST) ou intégraux « flush » ou « semi-flush » (par exemple ceux de type VAM SL, VAM MUST, VAM HP, VAM HTF). Elle concerne aussi les extrémités femelles de joints sans butée interne (par exemple ceux de type VAM SLIJ II ou VAM FJL à étanchéité interne par serrage radial).

## Revendications

1. Dispositif (D) de protection pour une extrémité femelle (EF) d'un composant (T) d'un joint fileté tubulaire pour le forage et l'exploitation de puits d'hydrocarbures, munie d'au moins un filetage intérieur (FI) et d'une surface annulaire d'extrémité (S1) et d'une surface interne (S2) placées respectivement en amont et en aval dudit filetage intérieur (FI) et présentant respectivement des première et seconde orientations choisies, ledit dispositif (D) comprenant un corps (CP) muni d'un filetage extérieur (FE) propre à coopérer avec ledit filetage intérieur (FI) et de premier (L1) et second (L2) éléments d'étanchéité flexibles de type annulaire placés respectivement en amont et en aval dudit filetage extérieur (FE) et agencés pour assurer des première et seconde étanchéités respectivement au niveau des surface interne (S2) et surface annulaire d'extrémité (S1), lesdits premier (L1) et second (L2) éléments d'étanchéité présentant des troisième et quatrième orientations choisies, dont l'une au moins diffère d'un angle au moins égal à 10° avec la deuxième ou première orientation correspondante avant vissage dudit dispositif (D) sur l'extrémité femelle (EF), et étant déformables par flexion axiale de manière à acquérir par contact de surface avec lesdites surface interne (S2) et surface annulaire d'extrémité (S1) une énergie s'opposant au moins partiellement à un dévissage imprévu lorsque ladite extrémité femelle (EF) est vissée sur ledit corps (CP) dans une position finale, caractérié en ce que ledit premier élément d'étanchéité (L1) est réalisé sous la forme d'une languette annulaire, ladite languette annulaire (L1) étant raccordée audit corps (CP) par la périphérie intérieure de celui-ci et se projette vers l'extérieur.

2. Dispositif selon la revendication 1, **caractérisé en ce que** ladite surface interne (S2) de l'extrémité femelle (EF) est une surface annulaire de butée.

3. Dispositif selon l'une des revendications 1 et 2, **caractérisé en ce que** ledit corps (CP) est agencé de sorte que pendant la phase de vissage ledit premier élément d'étanchéité (L1) entre en contact avec ladite surface interne (S2) avant que ledit
second élément d'étanchéité (L2) n'entre en contact avec ladite surface annulaire d'extrémité (S1).

4. Dispositif selon l'une des revendications 1 et 2, **caractérisé en ce que** ledit corps (CP) est agencé de sorte que pendant la phase de vissage et au moment ou ledit premier élément d'étanchéité (L1) entre en contact avec ladite surface interne (S2) ledit second élément d'étanchéité (L2) se trouve placé à une distance axiale de ladite surface annulaire d'extrémité (S1) comprise entre environ 0,5 mm et environ 1 mm.

5. Dispositif selon l'une des revendications 1 à 4, **caractérisé en ce que** les première et quatrième orientations diffèrent initialement d'un angle compris entre 10° et environ 30°.

6. Dispositif selon la revendication 5, **caractérisé en ce que** ledit angle entre les première et quatrième orientations est égal à environ 15°.

7. Dispositif selon l'une des revendications 1 à 4, **caractérisé en ce que** les deuxième et troisième orientations différent initialement d'un angle compris entre 10° et environ 30°.

8. Dispositif selon la revendication 7, **caractérisé en ce que** ledit angle entre les deuxième et troisième orientations est égal à environ 15°.

9. Dispositif selon l'une des revendications 1 à 8, **caractérisé en ce que** l'angle entre les deuxième et troisième orientations diminue au cours du vissage.

10. Dispositif selon l'une des revendications 1 à 9, **caractérisé en ce que** ledit second élément d'étanchéité (L2) est réalisé sous la forme d'une languette annulaire.

11. Dispositif selon l'une des revendications précédentes, **caractérisé en ce que** lesdits premier (L1) et second (L2) éléments d'étanchéité sont intégraux avec ledit corps (CP).

12. Dispositif selon l'une des revendications précédentes, **caractérisé en ce que** ledit corps (CP) est prolongé en aval dudit second élément d'étanchéité (L2) par un élément d'amortissement (EM).

13. Dispositif selon l'une des revendications précédentes, **caractérisé en ce qu'**il est réalisé dans un matériau thermoplastique.

14. Dispositif selon la revendication 13, **caractérise en ce que** ledit matériau thermoplastique est choisi dans un groupe comprenant au moins les mélanges à base de polycarbonate, le polyoxyméthylène ou polyacetal (POM), et les polyéthylènes à haute densité (PE-HD) ou à ultra haute densité (PE-UHD).

15. Dispositif selon l'une des revendications 13 et 14, **caractérisé en ce qu'**il est réalisé en une seule pièce par moulage de matériau thermoplastique.

16. Dispositif selon l'une des revendications 1 à 15, **caractérisé en ce que** ladite surface interne (S2) de l'extrémité femelle (EF) est une surface d'étanchéité par serrage radial.

## Patentansprüche

1. Schutzvorrichtung (D) für ein Buchsenende (EF) eines Rohrverschraubungsteils (T) für die Bohrung und die Ausbeutung von Kohlenwasserstoffquellen, mit mindestens einem Innengewinde (FI) und einer ringförmigen Endfläche (S1) und einer Innenfläche (S2), die vor bzw. hinter dem Innengewinde (FI) angeordnet sind und erste bzw. zweite gewählte Ausrichtungen aufweisen, wobei die Vorrichtung (D) einen Körper (CP) aufweist, der mit einem Außengewinde (FE) versehen ist zum Zusammenwirken mit dem Innengewinde (FI) und mit einem ersten (L1) und einem zweiten (L2) flexiblen ringförmigen Dichtelement, die vor bzw. hinter dem Außengewinde (FE) plaziert sind, und angeordnet sind, um eine erste und eine zweite Dichtung jeweils auf der Höhe der Innenfläche (S2) bzw. der ringförmigen Endfläche (S1) zu bilden, wobei das erste (L1) und das zweite (L2) Dichtelement eine dritte und eine vierte gewählte Ausrichtung aufweisen, von denen mindestens eine sich von der zweiten oder ersten entsprechenden Ausrichtung um einen Winkel von wenigstens 10° vor der Verschraubung der Vorrichtung (D) auf das Buchsenende (EF) unterscheidet, und wobei die Dichtelemente durch axiale Verbiegung derart verformbar sind, dass sie durch Flächenkontakt mit der Innenfläche (S2) und der ringförmigen Endfläche (S1) eine Energie aufnehmen, die sich mindestens teilweise einer nicht vorgesehenen Losschraubung widersetzt, wenn das Buchsenelement (EF) auf den Körper (CP) in einer Endstellung verschraubt ist, **dadurch gekennzeichnet, dass** das erste Dichtelement (L1) in Form einer ringförmigen Dichtlippe ausgebildet ist, wobei die ringförmige Lippe (L1) durch ihren Innenrand mit dem Körper (CP) verbunden ist und sich nach außen erstreckt.

2. Vorrichtung nach Anspruch 1, **dadurch gekennzeichnet, dass** die Innenfläche (S2) des Buchsenendes (EF) eine ringförmige Anschlagsfläche ist.

3. Vorrichtung nach einem der Ansprüche 1 und 2, **dadurch gekennzeichnet, dass** der Körper (CP) so angeordnet ist, dass während der Verschraubungsphase das erste Dichtelement (L1) in Kontakt mit der Innenfläche (S2) tritt, bevor das zweite Dichtelement (L2) in Kontakt mit der ringförmigen Endfläche (S1) tritt.

4. Vorrichtung nach einem der Ansprüche 1 und 2, **dadurch gekennzeichnet, dass** der Körper (CP) so angeordnet ist, dass während der Verschraubungsphase und zum Zeitpunkt, an dem das erste Dichtelement (L1) in Kontakt mit der Innenfläche (S2) tritt, das zweite Dichtelement (L2) sich in einem axialen Abstand von der ringförmigen Endfläche (S1) befindet, der zwischen ungefähr 0,5 mm und ungefähr 1 mm liegt.

5. Vorrichtung nach einem der Ansprüche 1 bis 4, **dadurch gekennzeichnet, dass** sich die erste und die vierte Ausrichtung anfänglich um einen Winkel zwischen 10° und etwa 30° unterscheiden.

6. Vorrichtung nach Anspruch 5, **dadurch gekennzeichnet, dass** der Winkel zwischen der ersten und der vierten Ausrichtung etwa gleich 15° ist.

7. Vorrichtung nach einem der Ansprüche 1 bis 4, **dadurch gekennzeichnet, dass** die zweite und die dritte Ausrichtung sich anfänglich um einen Winkel unterscheiden, der zwischen 10° und etwa 30° liegt.

8. Vorrichtung nach Anspruch 7, **dadurch gekennzeichnet, dass** der Winkel zwischen der zweiten und der dritten Ausrichtung etwa gleich 15° ist.

9. Vorrichtung nach einem der Ansprüche 1 bis 8, **dadurch gekennzeichnet, dass** sich der Winkel zwischen der zweiten und der dritten Ausrichtung während des Verschraubens verringert.

10. Vorrichtung nach einem der Ansprüche 1 bis 9, **dadurch gekennzeichnet, dass** das zweite Dichtelement (L2) in Form einer ringförmigen Lippe ausgebildet ist.

11. Vorrichtung nach einem der vorstehenden Ansprüche, **dadurch gekennzeichnet, dass** das erste (L1) und das zweite (L2) Dichtelement einstückig mit dem Körper (CP) ausgebildet sind.

12. Vorrichtung nach einem der vorstehenden Ansprüche, **dadurch gekennzeichnet, dass** der Körper (CP) hinter dem zweiten Dichtelement (L2) durch ein Dämpfungselement (EM) verlängert ist.

13. Vorrichtung nach einem der vorstehenden Ansprüche, **dadurch gekennzeichnet, dass** sie aus einem thermoplastischen Material hergestellt ist.

14. Vorrichtung nach Anspruch 13, **dadurch gekennzeichnet, dass** das thermoplastische Material ausgewählt ist aus einer Gruppe, die mindestens die Mischungen auf Polycarbonatbasis, Polyoxymethylen oder Polyacetal (POM) und die Polyethylene mit hoher Dichte (PE-HD) oder mit ultrahoher Dichte (PE-UHD) umfasst.

15. Vorrichtung nach einem der Ansprüche 13 und 14, **dadurch gekennzeichnet, dass** sie durch Spritzguss des thermoplastischen Materials in einem Stück hergestellt ist.

16. Vorrichtung nach einem der Ansprüche 1 bis 15, **dadurch gekennzeichnet, dass** die Innenfläche (S2) des Buchsenendes (EF) eine Dichtfläche durch radiale Quetschung darstellt.

## Claims

1. A device (D) for protecting a female end (EF) of a component (T) of a threaded tubular connection for drilling and working hydrocarbon wells, which is provided with at least one internal threading (FI) and an annular end surface (S1) and an internal surface (S2) placed respectively upstream and downstream of said internal threading (FI) and respectively having first and second selected orientations, said device (D) comprising a body (CP) provided with an external threading (FE) intended to cooperate with said internal threading (FI) and first (L1) and second (L2) annular type flexible sealing elements placed respectively upstream and downstream of said external threading (FE) and arranged to provide the first and second seals respectively at the internal surface (S2) and the annular end surface (S1), said first (L1) and second (L2) sealing elements having selected third and fourth orientations at least one of which differs by an angle of at least 10° from the corresponding second or first orientation before screwing said device (D) onto the female end (EF) and being deformable by axial bending to acquire, by surface contact with said internal surface (S2) and annular end surface (S1), an energy which at least partially opposes any unintentional unscrewing when said female end (EF) is screwed onto said body (CP) into a final position, **characterized in that** said first sealing element (L1) is in the form of an annular tongue, said annular tongue (L1) being connected to said body (CP) via the interior periphery thereof and projects outwardly.

2. A device according to claim 1, **characterized in that** said internal surface (S2) of the female end (EF) is an annular abutment surface.

3. A device according to claim 1 or claim 2, **characterized in that** said body (CP) is arranged so that during the screwing on phase, the first sealing element (L1) comes into contact with said internal surface (S2) before said second sealing element (L2) comes into contact with said annular end surface (S1).

4. A device according to claim 1 or claim 2, **characterized in that** said body (CP) is arranged so that when screwing on and at the moment said first sealing element (L1) comes into contact with said internal surface (S2), said second sealing element (L2) is positioned at an axial distance from said annular end surface (S1) which is in the range from about 0.5 mm to about 1 mm.

5. A device according to one of claims 1 to 4, **characterized in that** the first and fourth orientations initially differ by an angle in the range from 10° to about 30°.

6. A device according to claim 5, **characterized in that** said angle between the first and fourth orientations is about 15°.

7. A device according to one of claims 1 to 4, **characterized in that** the second and third orientations initially differ by an angle in the range from 10° to about 30°.

8. A device according to claim 7, **characterized in that** said angle between the second and third orientations is about 15°.

9. A device according to one of claims 1 to 8, **characterized in that** the angle between the second and third orientations reduces in the course of screwing on.

10. A device according to one of claims 1 to 9, **characterized in that** said second sealing element (L2) is produced in the form of an annular tongue.

11. A device according to one of the preceding claims, **characterized in that** said first (L1) and second (L2) sealing elements are integral with said body (CP).

12. A device according to one of the preceding claims, **characterized in that** said body (CP) is extended downstream of said second sealing element (L2) by a bumper element (EM).

13. A device according to one of the preceding claims, **characterized in that** it is produced from a thermoplastic material.

14. A device according to claim 13, **characterized in that** said thermoplastic material is selected from a group comprising at least mixtures based on polycarbonate, polyoxymethylene or polyacetal (POM), and high density polyethylenes (PE-HD) or ultra high density polyethylenes (PE-UHD).

15. A device according to claim 13 or claim 14, **characterized in that** it is produced in a single piece by moulding a thermoplastic material.

16. A device according to one of claims 1 to 15, **characterized in that** said internal surface (S2) of the female end (EF) is a sealing surface with radial interference fit.
